(19) 

Europäisches
Patentamt
European
Patent Office
Office européen
des brevets

(11) **EP 2 735 893 A2**

(12) **EUROPEAN PATENT APPLICATION**
published in accordance with Art. 153(4) EPC

(43) Date of publication:
**28.05.2014 Bulletin 2014/22**

(21) Application number: **12814253.6**

(22) Date of filing: **18.07.2012**

(51) Int Cl.:
*G02B 1/11* (2006.01)      *G02B 1/10* (2006.01)
*B32B 27/06* (2006.01)      *G02B 5/02* (2006.01)
*G02F 1/1335* (2006.01)

(86) International application number:
**PCT/KR2012/005734**

(87) International publication number:
**WO 2013/012251 (24.01.2013 Gazette 2013/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.07.2011   KR 20110071056
18.07.2012   KR 20120078336**

(71) Applicant: **LG Chem, Ltd.
Seoul 150-721 (KR)**

(72) Inventors:
  • **SHIM, Jae-Hoon
    Daejeon 305-744 (KR)**
  • **KANG, Joon-Koo
    Daejeon 305-741 (KR)**

  • **KOO, Jae-Pil
    Daejeon 302-736 (KR)**
  • **LIM, Ki-Uk
    Cheongju-si
    Chungbuk 361-869 (KR)**
  • **CHANG, Yeong-Rae
    Daejeon 302-120 (KR)**
  • **LEE, Soo-Kyoung
    Cheongju-si
    Chungbuk 360-567 (KR)**
  • **MOON, Joo-Jong
    Cheongwon-gun 363-883 (KR)**

(74) Representative: **Goddar, Heinz J.
Boehmert & Boehmert
Pettenkoferstrasse 20-22
80336 München (DE)**

(54) **ANTI-GLARE FILM EXHIBITING HIGH CONTRAST RATIO AND METHOD FOR MANUFACTURING SAME**

(57)    The present invention relates to an anti-glare film with excellent anti-glare properties as well as improved contrast ratio and image definition and a preparation method for the same. More specifically, the anti-glare film comprises an anti-glare layer comprising organic or inorganic particles having a volume average particle diameter of 5 to 10 μm and a photocurable resin.

Here, the difference in refraction index between the organic or inorganic particles and the photocurable resin is in the range of 0.005 to 0.05, and the volume average particle diameter of the organic or inorganic particles and the thickness of the anti-glare layer satisfy a defined mathematical formula.

**EP 2 735 893 A2**

**Description**

**FIELD OF THE INVENTION**

The present invention relates to an anti-glare film having improved contrast ratio and image definition and a preparation method for the same.

**BACKGROUND OF THE INVENTION**

Flat panel displays (FPDs), including LCD, PDP, OLED, rear-projection TV, etc., have a reflection of light on the surface of the monitor upon exposed to an incident light such as natural light, causing eye fatigue or headache and blurry vision at the image created in the displays. A solution to this problem is using an anti-glare film that has an uneven surface structure to scatter an incident light and uses the difference in refraction index between the resin constituting a coating layer and particles to induce internal scattering of the light.

The anti-glare film applied to the surface of display devices or the like for such a use purpose is required to have high definition and high contrast ratio as well as the anti-glare function. Generally, the higher haze value leads to the greater diffusion of the incident light, which improves the anti-glare effect. But, it also incurs image distortion with surface scattering of light and white blur with internal scattering of light, consequently deteriorating the contrast ratio.

Likewise, increasing the image definition and the contrast ratio deteriorates the anti-glare properties; and increasing the anti-glare property leads to deterioration in the image definition and the contrast ratio. It is thus considered as an important technique to control such characteristics in the manufacture of an anti-glare film for high-definition display.

In an attempt to find a solution to the above-specified problems with the prior art, the inventors of the present invention have made sustained studies on the anti-glare film with excellent anti-glare properties as well as improved contrast ratio and image definition to complete the present invention.

**DETAILED DESCRIPTION OF THE INVENTION**

**TECHNICAL OBJECTIVES**

It is an object of the present invention to provide an anti-glare film with excellent anti-glare properties as well as improved contrast ratio and image definition and a preparation method for the same.

**TECHNICAL SOLUTIONS**

The present invention provides an anti-glare film which comprises a transparent substrate layer and an anti-glare layer laminated on the transparent substrate layer. The anti-glare layer comprises organic or inorganic particles having a volume average particle diameter of 5 to 10 $\mu$m and a photocurable resin having the difference of refraction index from the organic or inorganic particles in the range of 0.005 to 0.05. And, the volume average particle diameter of the organic or inorganic particles and the thickness of the anti-glare layer satisfy the following mathematical formula:

$$[\text{Mathematical Formula}]$$
$$2 \times 10^{-2} \leq (d-T)/T \leq 2 \times 10^{-1}$$

In the mathematical formula, d is the volume average particle diameter of the organic or inorganic particles; and T is the dry thickness of the anti-glare layer.

The present invention also provides a method for preparing the anti-glare film.

Hereinafter, a detailed description will be given as to an anti-glare film and a preparation method for the same according to exemplary embodiments of the present invention.

In sustained studies on the anti-glare film with excellent anti-glare properties as well as improved contrast ratio and image definition, the inventors of the present invention have found out that it is possible to prepare a film having improved contrast ratio and image definition with excellent anti-glare properties by controlling the volume average particle diameter of particles contained in the anti-glare layer and the thickness of the anti-glare layer to meet a defined mathematical formula, thereby completing the present invention.

The anti-glare film according to one embodiment of the present invention comprises a transparent substrate layer and an anti-glare layer laminated on the transparent substrate layer, which anti-glare film comprises organic or inorganic particles having a volume average particle diameter of 5 to 10 $\mu$m and a photocurable resin having the difference of refraction index from the organic or inorganic particles in the range of 0.005 to 0.05. Here, the volume average particle diameter of the organic or inorganic particles and the thickness of the anti-glare layer satisfy the following mathematical formula:

[Mathematical Formula]

$$2 \times 10^{-2} \leq (d\text{-}T)/T \leq 2 \times 10^{-1}$$

In the mathematical formula, d is the volume average particle diameter of the organic or inorganic particles; and T is the dry thickness of the anti-glare layer.

In other words, anti-glare properties can be improved with the uneven surface when the organic or inorganic particles projecting on the anti-glare layer have a great projecting height. In this case, however, there occurs an excessive scattering of light, making it difficult to realize improved contrast ratio and image definition. Moreover, even when the anti-glare properties are improved by appropriately controlling the projecting height of the particles, there still remains a problem that image definition and contrast ratio deteriorate.

In regards to this, the inventors of the present invention have been studying to find out that an anti-glare film can be prepared with improved contrast ratio and image definition as well as excellent anti-glare properties by controlling the projecting height of the organic or inorganic particles contained in the anti-glare layer and the thickness of the anti-glare layer to satisfy a defined mathematical formula, which is the above-specified mathematical formula.

Besides, in the anti-glare film according to one embodiment of the present invention, the projecting portion of the organic or inorganic particles on the anti-glare layer may have a width-to-height ratio of 1 : 0.03 to 1 : 0.18.

More specifically, the organic or inorganic particles are shaped like a sphere, partly covered with the anti-glare layer and partly projecting on the anti-glare layer. The term "the width of the projecting portion of the organic or inorganic particles" as used herein means the width length of the cross section of the spherical organic or inorganic particle supposedly created when the anti-glare layer cuts off the projecting portion of the particle on the horizontal scale. The term "the height of the projecting portion of the organic or inorganic particles" as used herein means the vertical length of the particle projecting on the anti-glare layer.

The width-to-height ratio of the projecting portion of the organic or inorganic particles is preferably in the range of 1 : 0.03 to 1 : 0.18. The width-to-height ratio of the projecting portion of the organic or inorganic particles less than 1 : 0.03 leads to difficulty of achieving anti-glare properties; while the width-to-height ratio greater than 1 : 0.18 ends up excessively increasing the anti-glare properties, but with failure to secure improved contrast ratio.

Apart from the volume average particle diameter, the organic or inorganic particle may have a particle diameter of 5 to 10 μm with a view to properly inducing the light scattering effect. In the case of using such a particle, the thickness of the anti-glare layer is preferably 4.2 to 9.8 μm, more preferably 4.5 to 9.7 μm, most preferably 4.6 to 9.6 μm. When the thickness of the anti-glare layer is less than 4.2 μm, the projecting portion of the particle contained in the anti-glare layer that projects on the film layer has such a height as to deteriorate the anti-glare effect; while when the thickness of the anti-glare layer is greater than 9.8 μm, the coating is extremely thickened and thus ready to brittle.

The organic or inorganic particles may not be limited in their composition as long as they are commonly used to form an anti-glare film. More specifically, the organic or inorganic particles may include at least one selected from the organic particle group consisting of acryl-based resin, styrene-based resin, epoxy resin, and nylon resin; and the inorganic particle group consisting of silicon oxide, titanium dioxide, indium oxide, tin oxide, zirconium oxide, and zinc oxide.

More specifically, the organic particles may include at least one selected from the group consisting of methyl(meth)acrylate, ethyl(meth)acrylate, propyl(meth)acrylate, n-butyl(meth)acrylate, isobutyl(meth)acrylate, t-butyl(meth)acrylate, 2-ethylhexyl(meth)acrylate, n-octyl(meth)acrylate, lauryl(meth)acrylate, stearyl(meth)acrylate, 2-hydroxyethyl(meth)acrylate, polyethylene glycol(meth)acrylate, methoxy polyethylene glycol(meth)acrylate, glycidyl(meth)acrylate, dimethylaminoethyl(meth)acrylate, diethylaminoethyl(meth)acrylate, styrene, p-methylstyrene, m-methylstyrene, p-ethylstyrene, m-ethylstyrene, p-chlorostyrene, m-chlorostyrene, p-chloromethylstyrene, m-chloromethylstyrene, styrene sulfonic acid, p-t-butoxystyrene, m-t-butoxystyrene, vinyl acetate, vinyl propionate, vinyl butyrate, vinyl ether, allyl butyl ether, allyl glycidyl ether, (meth)acrylic acid, maleic acid, unsaturated carboxylic acid, alkyl(meth)acrylamide, (meth)acrylonitrile, and (meth)acrylate.

For preventing the light glaring effect on the user, the organic or inorganic particles used as an ingredient to induce the light scattering effect may be added in an amount of, preferably 1 to 20 parts by weight, more preferably 5 to 15 parts by weight, most preferably 6 to 10 parts by weight, with respect to 100 parts by weight of the photocurable resin.

The content of the organic or inorganic particles less than 1 part by weight with respect to 100 parts by weight of the photocurable resin leads to failure to realize a sufficiently high haze value affected by the internal scattering, while the content of the organic or inorganic particles greater than 20 parts by weight ends up increasing the viscosity of the coating composition for preparation of the anti-glare layer to result in poor coatability and realizing an excessively high haze value affected by the internal scattering to deteriorate the contrast ratio.

In the anti-glare film according to the embodiment of the present invention, the photocurable resin may also not be limited in its composition as long as it can be used for general anti-glare films. The photocurable resin included in the anti-glare film according to the embodiment can be used without limitation in its composition, with the provision that it has the difference of refraction index from the organic or inorganic particles in the range of 0.005 to 0.05.

The difference in refraction index between the particles and the photocurable resin less than 0.005 leads to difficulty of acquiring an appropriate haze value required to the anti-glare film, while the difference in refraction index between the particles and the photocurable resin greater than 0.05 makes the internal haze value too high to achieve improved contrast ratio.

More specifically, the photocurable resin may include acryl-based resins, such as, for example, reactive acrylate oligomers, multifunctional acrylate monomers, or mixtures thereof. Specific examples of the reactive acrylate oligomers may include urethane acrylate oligomer, epoxy acrylate oligomer, polyester acrylate, polyether acrylate, or mixtures thereof.

Specific examples of the multifunctional acrylate monomers may include dipentaerythritol hexaacrylate, dipentaerythritol hydroxy pentaacrylate, pentaerythritol tetraacrylate, pentaerythritol triacrylate, trimethylene propyl triacrylate, propoxylated glycerol triacrylate, trimethylpropane ethoxy triacrylate, 1,6-hexanediol diacrylate, propoxylated glycero triacrylate, tripropylene glycol diacrylate, ethylene glycol diacrylate, or mixtures thereof.

On the other hand, the anti-glare film according to the embodiment is designed to have the size of particles included in the anti-glare layer and the thickness of the anti-glare layer satisfy a defined mathematical formula, so it can achieve improved contrast ratio and image definition as well as excellent anti-glare properties. More specifically, the anti-glare film has a light transmission of at least 90 % as measured on the basis of JIS-K-7105, a haze value of 0.5 to 5.0, a 60° reflection gloss of 75 to 90, and an image definition of at least 250 %.

In the above-described anti-glare film according to the embodiment, the transparent substrate material for the transparent substrate layer is not specifically limited in its composition and may include those commonly used in the technical field related to the preparation of anti-glare films. Specific examples of the transparent substrate material may include, but are not limited to, at least one selected from the group consisting of triacetylcellulose (TAC), polyethyleneterephthalate (PET), polyethylenenaphthalate (PEN), polycarbonate (PC), and norbomene-based polymers. Preferably, the transparent substrate material is triacetylcellulose (TAC) in the case that the anti-glare film is applied to a polarizing plate for high-definition display. The transparent substrate layer preferably has a light transmission of at least 85 %. Further, the transparent substrate layer may have a haze value of 1% or less and a thickness of 30 to 120 m. But the haze value and the thickness are not given to limit the present invention.

The anti-glare film according to the embodiment may further include a low-reflection layer overlying the anti-glare layer and/or underlying the transparent substrate layer. In this regard, the low-reflection layer may have a thickness of 40 to 200 nm and a refraction index of 1.2 to 1.45. A low-reflection material for forming the low-reflection layer may include metal fluorides having a refraction index of 1.40 or less, such as $NaF$, $LiF$, $AlF_3$, $Na_5AlF_6$, $MgF_2$, or $YF_3$, which can be used alone or in mixture of at least two. Preferably, the low-reflection material has a particle diameter of 1 to 100 nm.

The low-reflection layer may further include fluoro-based silanes. Specific examples of the fluoro-based silanes may include, but are not limited to, tridecafluorooctyltriethoxysilane, heptadecafluorodecyltrimethoxysilane, or heptadecafluorodecyltriisopropoxysilane.

These fluoro-based silanes may be used alone or in mixture of at least two.

In accordance with another embodiment of the present invention, the anti-glare film may further include an anti-stain layer underlying the transparent substrate layer and/or overlying the anti-glare layer. The thickness of the anti-stain layer may greater than 0 and 100 nm or less. The anti-stain layer may be formed from, if not specifically limited to, a mono-functional or multifunctional acrylate containing fluoro groups.

In accordance with still another embodiment of the present invention, there is provided a display device comprising the above-specified anti-glare film. Such a display device may be a high-definition flat display, more specifically, including LCD,, PDP, OLED, or rear-projection TV.

In accordance with further another embodiment of the present invention, there is provided a method for preparing the anti-glare film according to the above-described embodiment. The method for preparing an anti-glare film according to one embodiment of the present invention may comprise: (a) preparing a transparent substrate layer; (b) applying a coating composition comprising organic or inorganic particles, a photocurable resin, and a photoinitiator onto the transparent substrate layer, the organic or inorganic particles having a volume average particle diameter of 5 to 10 $\mu$m, the photocurable resin having the difference of refraction index from the organic or inorganic particles in the range of 0.005 to 0.05, where the coating composition is applied so that the volume average particle diameter of the particles and the thickness of an anti-glare layer satisfy the following mathematical formula; and (c) photocuring and drying the applied coating composition under exposure to electron beams or UV light to form the anti-glare layer:

[Mathematical Formula]

$$2 \times 10^{-2} \leq (d-T)/T \leq 2 \times 10^{-1}$$

wherein d is the volume average particle diameter of the organic or inorganic particles; and T is the dry thickness of the anti-glare layer.

The method of applying the coating composition is not specifically limited and may be a commonly used coating method. More specifically, the application may be performed by wet coating, such as roll coating, bar coating, spray coating, dip coating, or spin coating.

In the step of applying the coating composition, an organic solvent may be added to the coating composition in order to enhance the workability and improve the strength of the final anti-glare layer. With a view to providing an appropriate viscosity to the coating composition and enhancing the strength of the final film, the added amount of the organic solvent is, with respect to 100 parts by weight of the photocurable resin, preferably 50 to 500 parts by weight, more preferably 100 to 400 parts by weight, most preferably 150 to 350 parts by weight.

The organic solvent as used herein is not specifically limited in its composition. Specific examples of the organic solvent may include at least one selected from the group consisting of lower alcohols having 1 to 6 carbon atoms, acetates, ketones, cellosolves, dimethyl formamide, tetrahydrofuran, propylene glycol monomethylether, toluene, and xylene. These organic solvents may be used alone or in mixture of at least two.

Specific examples of the lower alcohols may include, but are not limited to, methanol, ethanol, isopropylalcohol, butylalcohol, isobutylalcohol, or diacetone alcohol. Specific examples of the acetates may include, but are not limited to, methylacetate, ethylacetate, isopropylacetate, butylacetate, or cellosolve acetate. Specific examples of the ketones may include, but are not limited to, methylethylketone, methylisobutylketone, acetylacetone, or acetone.

The coating composition may further include a photoinitiator for the purpose of curing upon exposure to UV radiation. The added amount of the photoinitiator may be 0.1 to 10 parts by weight with respect to 100 parts by weight of the photocurable resin. The content of the photoinitiator less than 0.1 part by weight with respect to 100 parts by weight of the photocurable resin ends up failing to cause sufficient curing under UV radiation, while the content of the photoinitiator greater than 10 parts by weight with respect to 100 parts by weight of the photocurable resin leads to deterioration in the strength of the final anti-glare film.

The photoinitiator as used herein is not specifically limited in its composition as long as it is usually available for forming an anti-glare film. Specific examples of the photoinitiator may include, but are not limited to, at least one selected from the group consisting of 1-hydroxy cyclohexylphenyl ketone, benzyl dimethyl ketal, hydroxydimethyl acetophenone, benzoin, benzoin methyl ether, benzoin ethyl ether, benzoin isopropyl ether, and benzoin butyl ether. These photoinitiators may be used alone or in mixture of at least two.

The coating composition may further include at least one additive selected from the group consisting of a levelling agent, a wetting agent, an antifoaming agent, and silica having a volume average particle diameter of 1 to 50 nm. The added amount of the additive may be in the range of 0.01 to 10 parts by weight with respect to 100 parts by weight of the photocurable resin.

The levelling agent is to level the surface of the coating layer prepared from the anti-glare coating composition. The wetting agent is to lower the surface energy of the anti-glare coating composition, helping uniform application of the anti-glare coating composition on the transparent substrate layer.

The antifoaming agent is added to eliminate bubbles in the anti-glare coating composition. The silica is used as inorganic particles to increase the anti-scratch properties and the strength of the coating layer. Using silica having a volume average particle diameter of 1 to 50 nm secures forming a transparent coating layer and desirably does not affect the optical properties of the coating layer.

In the preparation method, the photocuring and drying step is preferably performed to form the anti-glare layer to a thickness of 4.2 to 9.8 $\mu$m. The relation between the thickness of the anti-glare layer and the volume average particle diameter of the organic or inorganic particles is as described in the embodiment of the anti-glare film.

The content of the organic or inorganic particles in the coating composition may be 1 to 20 parts by weight with respect to 100 parts by weight of the photocurable resin. The other features of the organic or inorganic particles included in the coating composition, such as type, refraction index, and volume average particle diameter, are also as described in the embodiment of the anti-glare film.

## ADVANTAGEOUS EFFECT OF THE INVENTION

As described above, the present invention can provide a film having improved contrast ratio and image definition as well as excellent anti-glare properties.

## DETAILS FOR PRACTICING THE INVENTION

Hereinafter, a detailed description will be given as to the functions and effects of the present invention by way of examples, which are given merely to illustrate the present invention and not intended to limit the scope of the present invention.

## 1. Preparation of Anti-Glare Film

### [Example 1]

10 g of urethane oligomer (manufactured by SK CYTEC), 20 g of a multifunctional monomer (compound name: dipentaerythritol hexa acrylate (DPHA)), 30 g of methylethylketone and 30 g of isopropyl alcohol as solvents, 2 g of a photoinitiator (Igacure 184, Ciba) and 1 g of an additive (Tego Glide 450) were uniformly mixed together to prepare a hard coating composition. To the hard coating composition was added 2 g of acryl-styrene copolymer resin (manufactured by Sekisui Plastic) as organic particles having a volume average particle diameter of 5 $\mu$m and a refraction index of 1.525 to prepare an anti-glare coating composition.

The anti-glare coating composition was applied to a dry thickness of 4.5 to 4.8 $\mu$m on an 80$\mu$m-thick triacetyl-cellulose-based transparent substrate by way of bar coating. Subsequently, the applied anti-glare coating composition was cured under exposure to UV radiation of 280 mJ/cm$^2$ to form an anti-glare film.

### [Example 2]

The procedures were performed in the same manner as described in Example 1 to prepare an anti-glare film, excepting that a coating composition using an acryl-styrene copolymer resin (manufactured by Sekisui Plastic) as organic particles having a volume average particle diameter of 8 $\mu$m and a refraction index of 1.525 was applied to form an anti-glare layer to a dry thickness of 7.5 to 7.8 $\mu$m.

### [Comparative Example 1]

The procedures were performed in the same manner as described in Example 1 to prepare an anti-glare film, excepting that a coating composition using an acryl-styrene copolymer resin (manufactured by Sekisui Plastic) as organic particles having a volume average particle diameter of 5 $\mu$m and a refraction index of 1.525 was applied to form an anti-glare layer to a dry thickness of 4 $\mu$m.

### [Comparative Example 2]

The procedures were performed in the same manner as described in Example 1 to prepare an anti-glare film, excepting that a coating composition using an acryl-styrene copolymer resin (manufactured by Sekisui Plastic) as organic particles having a volume average particle diameter of 4 $\mu$m and an infraction index of 1.525 was applied to form an anti-glare layer to a dry thickness of 3.5 to 3.8 $\mu$m.

The volume average particle diameter of the particles contained in each coating composition used to prepare the anti-glare films according to the Examples and the Comparative Examples and the dry thickness of the anti-glare layer of the resultant anti-glare film can be summarized as follows:

[Table 1]

| | Volume average particle diameter of particles: d ($\mu$m) | Thickness of anti-glare layer: T ($\mu$m) | d-T | (d-T)/T |
|---|---|---|---|---|
| Example 1 | 5 | 4.5~4.8 | 0.2~0.5 | 0.04~0.11 |
| Example 2 | 8 | 7.5~7.8 | 0.2~0.5 | 0.026~0.067 |
| Comparative Example 1 | 5 | 4 | 1 | 0.25 |
| Comparative Example 2 | 4 | 3.5~3.8 | 0.2~0.5 | 0.05~0.14 |

## 2. Experimental Example: Evaluation of Properties of Anti-Glare Films

### 1) Light Transmission/ Haze Value

HM-150 (manufactured by Murakami Color Research Laboratory) was used to measure the light transmission and the haze value on the basis of JIS-K-7105.

### 2) 60° Reflection Gloss

Micro-TRI-gloss (manufactured by BYK Gardner) was used to measure the 60° reflection gloss.

### 3) Image Definition (%)

ICM-1T (manufactured by Suga Test Instrument Co., Ltd.) was used to measure the image definition.

### 4) Contrast Ratio

The contrast ratio was determined according to the Korean Industrial Standards KS C IEC 61988-2-1.

### 5) Reflection Rate

Solid Spec-3700 (manufactured by Shimadzu) was used to measure the reflection rate of the anti-glare film.

### 6) Image Flare of Fluorescent Light

The anti-glare film with a black tape attached to the back side was exposed to the light from a fluorescent lamp to observe the image of the fluorescent light created on the surface of the film. The observation results were classified as follows:

□: No image of the fluorescent light observed.
○: An entirely flaring image of the fluorescent light.
X: A definite image of the fluorescent light.

The results of the experiments 1 to 6 are presented in Table 2.

[Table 2]

|  | Example 1 | Example 2 | Comparative Example 1 | Comparative Example 2 |
|---|---|---|---|---|
| Light transmission (%) | 93.5 | 93.4 | 93.1 | 93.5 |
| Haze value | 1.8 | 2.1 | 3.5 | 2 |
| Gloss | 80 | 82 | 72 | 84 |
| Image definition (%) | 380 | 375 | 260 | 380 |
| Image flare of fluorescent light | ○ | ○ | □ | X |
| Contrast ratio | 450 | 432 | 325 | 430 |

As can be seen from Table 2, the anti-glare films according to Examples 1 and 2 using particles having a volume average particle diameter of 5 to 10 μm and satisfying a defined mathematical formula in terms of the volume average particle diameter of the particles included in the anti-glare layer and the thickness of the anti-glare layer had improved contrast ratio with anti-glare properties maintained at a predetermined level or above as demonstrated by the experimental results in regards to fluorescent image flare and gloss.

Contrarily, the anti-glare film according to Comparative Example 1 using particles some of which have a particle diameter out of the range of 5 to 10 μm and not satisfying a defined mathematical formula in terms of the volume average particle diameter of the particles included in the anti-glare layer and the thickness of the anti-glare layer had poor image definition and contrast ratio even though it was excellent in anti-glare properties according to the fluorescent image flare and the gloss value because of the large projecting portion of the particles above the thickness of the anti-glare film.

On the other hand, the anti-glare film according to Comparative Example 2 satisfying a defined mathematical formula in terms of the volume average particle diameter of the particles included in the anti-glare layer and the thickness of the anti-glare layer but using particles having a volume average particle diameter less than 5 $\mu$m, out of the range of 5 to 10 $\mu$m, secured a defined projecting height of the particles on the anti-glare layer but showed poor anti-glare effects as revealed from the fluorescent image flare and the gloss value.

## Claims

1. An anti-glare film, which comprises a transparent substrate layer and an anti-glare layer laminated on the transparent substrate layer,
the anti-glare layer comprising organic or inorganic particles having a volume average particle diameter of 5 to 10 $\mu$m and a photocurable resin,
wherein the difference in refraction index between the organic or inorganic particles and the photocurable resin is 0.005 to 0.05,
wherein the volume average particle diameter of the organic or inorganic particles and the thickness of the anti-glare layer satisfy the following mathematical formula,
the organic or inorganic particles having a particle diameter of 5 to 10 $\mu$m:

$$[\text{Mathematical Formula}]$$
$$2 \times 10^{-2} \leq (d-T)/T \leq 2 \times 10^{-1}$$

wherein d is the volume average particle diameter of the organic or inorganic particles; and T is the dry thickness of the anti-glare layer.

2. The anti-glare film as claimed in claim 1, wherein in a portion of the organic or inorganic particles projecting on the anti-glare layer, the projecting portion of the organic or inorganic particles has a width-to-height ratio of 1 : 0.03 to 1 : 0.18.

3. The anti-glare film as claimed in claim 1, wherein the anti-glare layer has a thickness of 4.2 to 9.8 $\mu$m.

4. The anti-glare film as claimed in claim 1, wherein the organic or inorganic particles are contained in an amount of 1 to 20 parts by weight with respect to 100 parts by weight of the photocurable resin.

5. The anti-glare film as claimed in claim 1, wherein the organic particles include at least one selected from the group consisting of acryl-based resin, styrene-based resin, epoxy resin, and nylon resin.

6. The anti-glare film as claimed in claim 1, wherein the inorganic particles include at least one selected from the group consisting of silicon oxide, titanium dioxide, indium oxide, tin oxide, zirconium oxide, and zinc oxide.

7. The anti-glare film as claimed in claim 1, wherein the photocurable resin includes at least one selected from a reactive acrylate oligomer group consisting of urethane acrylate oligomer, epoxy acrylate oligomer, polyester acrylate, and polyether acrylate; and a multifunctional acrylate monomer group consisting of dipentaerythritol hexaacrylate, dipentaerythritol hydroxy pentaacrylate, pentaerythritol tetraacrylate, pentaerythritol triacrylate, trimethylene propyl triacrylate, propoxylated glycerol triacrylate, trimethylpropane ethoxy triacrylate, 1,6-hexanediol diacrylate, propoxylated glycero triacrylate, tripropylene glycol diacrylate, and ethylene glycol diacrylate.

8. The anti-glare film as claimed in claim 1, wherein the anti-glare film has a light transmission of at least 90 % as measured on the basis of JIS-K-7105, a haze value of 0.5 to 5.0, a 60° reflection gloss of 75 to 90, and an image definition of at least 250 %.

9. A display device comprising the anti-glare film as claimed in any one of claims 1 to 8.

10. A method for preparing an anti-glare film, comprising:

(a) preparing a transparent substrate layer;

(b) applying a coating composition comprising organic or inorganic particles, a photocurable resin, and a photoinitiator onto the transparent substrate layer,

the organic or inorganic particles having a volume average particle diameter of 5 to 10 $\mu$m,

the photocurable resin having the difference of refraction index from the organic or inorganic particles in the range of 0.005 to 0.05,

wherein the coating composition is applied to have the volume average particle diameter of the particles and the thickness of an anti-glare layer satisfy the following mathematical formula; and

(c) photocuring and drying the applied coating composition under exposure to electron beams or UV light to form the anti-glare layer,

the organic or inorganic particles having a particle diameter of 5 to 10 $\mu$m:

[Mathematical Formula]

$$2 \times 10^{-2} \leq (d-T)/T \leq 2 \times 10^{-1}$$

wherein d is the volume average particle diameter of the organic or inorganic particles; and T is the dry thickness of the anti-glare layer.

11. The method as claimed in claim 10, wherein in a portion of the organic or inorganic particles projecting on the anti-glare layer, the projecting portion of the organic or inorganic particles has a width-to-height ratio of 1 : 0.03 to 1 : 0.18.

12. The method as claimed in claim 10, wherein the photocuring and drying step (c) is performed to form the anti-glare layer to a thickness of 4.2 to 9.8 $\mu$m.

13. The method as claimed in claim 10, wherein the coating composition comprises 1 to 20 parts by weight of the organic or inorganic particles with respect to 100 parts by weight of the photocurable resin.